Europäisches Patentamt

European Patent Office

Office européen des brevets

(19)

(11) Veröffentlichungsnummer: **0 098 540 B1**

(12) **EUROPÄISCHE PATENTSCHRIFT**

(45) Veröffentlichungstag der Patentschrift:
27.11.85

(51) Int. Cl.⁴: **G 02 B 7/16**, G 02 B 21/14

(21) Anmeldenummer: 83106408.4

(22) Anmeldetag: 01.07.83

(54) **Durchlichtbeleuchtungseinrichtung.**

(30) Priorität: 08.07.82 DE 3225479

(43) Veröffentlichungstag der Anmeldung:
18.01.84 Patentblatt 84/3

(45) Bekanntmachung des Hinweises auf die Patenterteilung:
27.11.85 Patentblatt 85/48

(84) Benannte Vertragsstaaten:
**AT DE FR GB**

(56) Entgegenhaltungen:
**DE - A - 3 042 186**
**DE - B - 1 807 786**
**US - A - 2 565 419**

(73) Patentinhaber: **Firma Carl Zeiss, D-7920 Heidenheim (Brenz) (DE)**

(84) Benannte Vertragsstaaten: **AT DE FR GB**

(73) Patentinhaber: **CARL-ZEISS-STIFTUNG Trading as CARL ZEISS, D-7920 Heidenheim (Brenz) (DE)**

(84) Benannte Vertragsstaaten: **GB**

(72) Erfinder: **Weber, Klaus, Dr., Baumgartenweg 22, D-7923 Königsbronn (DE)**
Erfinder: **Willert, Manfred, Schlehenweg 17, D-7923 Königsbronn (DE)**
Erfinder: **Blessmann, Heinz, Bahnhofstrasse 15a, D-3405 Rosdorf (DE)**

## Beschreibung

Durchlichtbeleuchtungseinrichtungen für Mikroskope der gehobenen Ausbaustufe besitzen einen zentrier- und fokussierbaren Kondensor, eine Aperturirisblende in der hinteren Brennebene des Kondensors sowie einen Revolver, der zentrierbar gelagerte Blenden (bzw. Hilfslinsen), Polarisatoren und Filter zur Realisierung verschiedenartiger Kontrastierungsverfahren enthält und zuschaltbare Hilfslinsen zur Ausleuchtung grosser Sehfelder bzw. Lupenvergrösserung besitzt. Infolge der Vielzahl der dabei zu betätigenden Einstellmittel sind derartige Beleuchtungseinrichtungen nicht einfach zu handhaben und bergen selbst für den Fachmann die Gefahr der Fehlbedienung, beispielsweise durch versehentliches Zuziehen der Aperturblende bei der Beobachtung im Phasenkontrast.

Zur Vermeidung dieses Bedienungsfehlers ist aus der DE-A Nr. 3042186 bekannt, die Aperturirisblende über eine Feder und einen Steuerhebel mit dem Revolver zu koppeln, derart, dass die Blende in Schaltstellung „Phasenkontrast" des Revolvers aufgezogen bleibt. Eine Verringerung der Anzahl der nötigen Einstellhebel wird bei dieser bekannten Beleuchtungseinrichtung nicht erreicht; die Aperturirisblende und der Revolver werden über separate Einstellhandhaben betätigt.

Es sind daneben Beleuchtungseinrichtungen der unteren Ausbaustufe für Mikroskope, z. B. für den Schulunterricht bekannt, die in ihrem Aufbau stark vereinfacht sind. Allerdings wird die Vereinfachung auf Kosten wichtiger Funktionen erreicht, beispielsweise durch Weglassen der Höhenverstellung des Kondensors, der dann nicht mehr das exakte Einstellen Köhler'scher Beleuchtungsbedingungen erlaubt.

Bei einer solchen, mit feststehendem Kondensor ausgerüsteten Beleuchtungseinrichtung ist es bekannt, den Betätigungshebel für eine zuschaltbare Hilfslinse bzw. Ringblende mit dem Einstellorgan der Aperturblende zu koppeln. Die bekannte Einrichtung besitzt eine Schaltwippe, die an einer um die optische Achse schwenkbaren Drehachse befestigt ist. Beim Umlegen der Wippe rastet der Linsenhalter in eine am Kondensorgehäuse befindlichen Gleitsitz ein, in dem er mit dem Betätigungshebel der Wippe um die optische Achse gedreht werden kann, und nimmt dabei einen die Blende steuernden Finger mit.

Bei dieser Einrichtung ist also der Blendenbetätigungshebel ohne Verzicht auf die Funktion der Irisblende eingespart, und gleichzeitig wird beim Umschalten in die Position „Hilfslinse" bzw. „Phasenkontrast" die Aperturirisblende voll aufgezogen, beim Zurückschalten in die Ausgangsposition allerdings auch wieder geschlossen.

Nachteilig ist dabei, dass infolge der auf zwei begrenzten Anzahl der Schaltstellungen beispielsweise neben der Hellfeldebleuchtung kleiner und nach Zuschalten der Linse grosser Objektfelder keine weiteren Kontrastierungsmöglichkeiten bestehen. Will man im Phasenkontrast mikroskopieren ist ein Austausch der gesamten Schaltwippe erforderlich gegen ein Exemplar, das anstelle der Hilfslinse eine mit Hilfe von Rändelschrauben zentrierbare Ringblende trägt.

Eine Vergrösserung der Anzahl der Schaltstellungen zur Vermeidung dieses lästigen Wechsels ist jedoch nicht ohne weiteres möglich, da der Bewegungsbereich der Schaltwippe infolge des Eingriffs mit dem Steuerfinger der Blende begrenzt ist.

Ausgehend von einer Beleuchtungseinrichtung nach dem Oberbegriff ist es die Aufgabe der vorliegenden Erfindung die Kopplung zwischen Revolver und Blende so zu gestalten, dass ein freies Durchschalten des Revolvers gewährleistet ist und die Anzahl der nutzbaren Schaltstellungen vergrössert werden kann.

Diese Aufgabe wird durch eine Ausbildung gemäss den Merkmalen im Kennzeichen des Hauptanspruches gelöst.

Mit der erfindungsgemässen Beleuchtungseinrichtung können bei entsprechender Bestückung der Aufnahmeöffnungen, die vom Benutzer selbst vorgenommen werden kann, auf einfache Weise, d. h. ohne Wechsel des Revolvers gängige Kontrastierungsverfahren durchgeführt werden. Da der Revolver nunmehr frei durchschaltet, ist bei vorgegebener Schaltrichtung gewährleistet, dass die Aperturblende nach jedem Umschaltvorgang stets voll geöffnet ist.

Zweckmässig ist es, wenn alle Aufnahmeöffnungen im Revolver untereinander gleich ausgeführt sind, da dies die Bestückung erleichtert.

Weiterhin ist es vorteilhaft, wenn der Revolver ein mit einer umlaufenden Rändelung versehenes, ringförmiges Gehäuse besitzt, das mehrere der Anzahl der Aufnahmeöffnungen entsprechende, unterschiedlich geformte Markierungen, beispielsweise Betätigungsfinger unterschiedlicher Länge aufweist. Der Benutzer kann dann die Einstellung der gewünschten Schaltposition „blind", d. h. ohne den Revolver ansehen zu müssen, vornehmen.

Beim Mikroskopieren im Phasenkontrast ist es notwendig, die Ringblende in der Brennebene des Kondensors relativ zum Phasenring in der Austrittspupille des Objektivs zu zentrieren. Dies geschieht gewöhnlich durch zwei Einstellschrauben, mit denen der Blendeneinsatz verschoben werden kann. Da derartige Einstellschrauben aber das Auswechseln der Einsätze stark erschwert, ist es zweckmässig, den Einsatz des Ringblendenträgers mit einer Kugelkalotte zu versehen, die in einem dafür vorgesehenen Halter gelagert ist und ein allseitiges Verschwenken des Blendenträgers von Hand gegen Reibung und damit ein Zentrieren der Ringblende erlaubt.

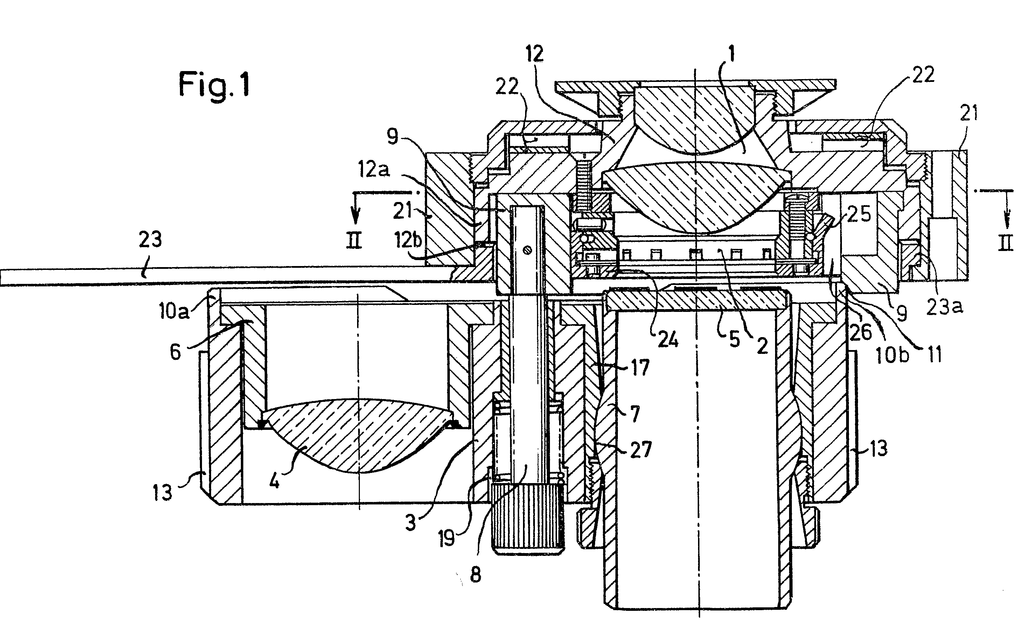

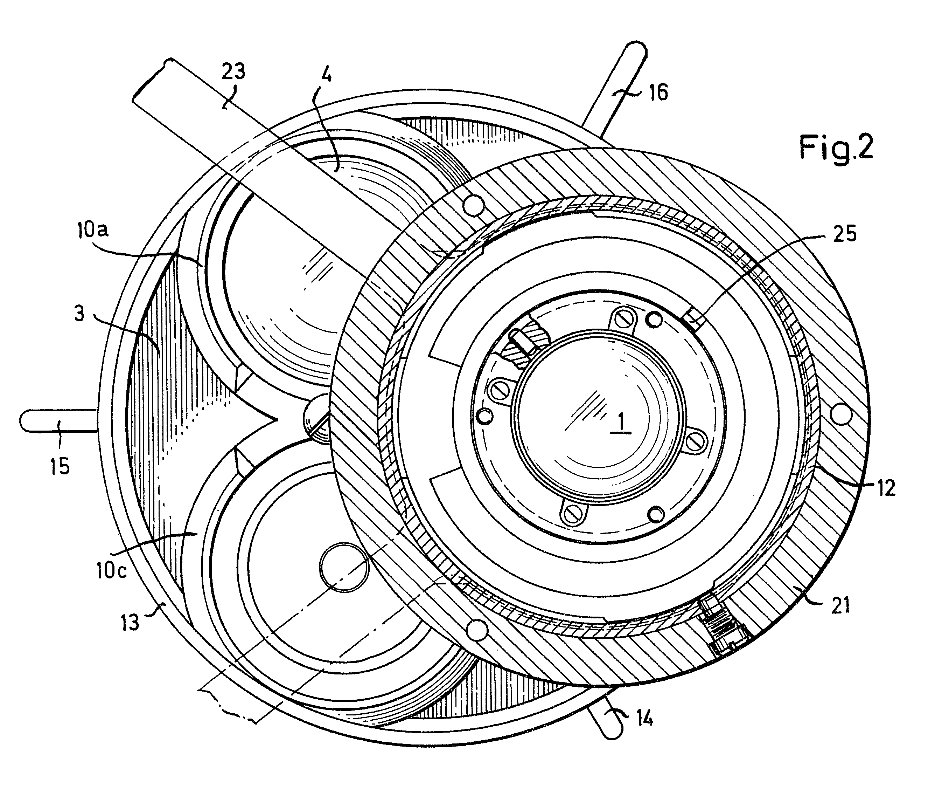

Weitere vorteilhafte Ausgestaltungen der Erfindung sind in den Unteransprüchen aufgeführt und werden nachstehend anhand der Fig. 1 und 2 der beigefügten Zeichnungen näher erläutert. Dabei zeigt:

Fig. 1 eine Schnittzeichnung der Beleuchtungseinrichtung in einer die optische Achse enthaltenden Ebene;

Fig. 2 einen weiteren Schnitt längs der Linie II-II in Fig. 1.

In der in den Fig. 1 und 2 dargestellten Beleuchtungseinrichtung sind ein zweilinsiger Kondensor 1, eine Aperturirisblende 2 und ein Revolver 3 zum Zuschalten einer Hilfslinse 4 bzw. einer Ringblende 5 zu einer Baueinheit zusammengefasst.

Die Fassung 12 des Kondensors 1 ist gegen den Druck einer Wellfeder 22 achsial verschieblich in dem feststehenden, am Tisch eines Mikroskops zu befestigenden Gehäuseteils 21 gelagert. Der ringhülsenförmige, untere Teil 12a der Fassung 12 besitzt an seiner Stirnseite 12b ein sägezahnartiges Profil und sitzt auf einem als Gegenstück ausgebildeten, ringförmigen Ansatz 23a des Fokussierhebels 23 auf. Durch Drehen des Fokussierhebels 23 wird also die Achsialbewegung des Kondensors 1 bewirkt. Dabei bewegen sich die an den Kondensor angehängte Aperturirisblende 2 und der Revolver 3 mit.

Die Irisblende 2 besitzt einen drehbaren Ring 24, von dem die Blendenlamellen angetrieben werden. Dieser Ring 24 ist mit einer Nase 25 versehen, die in einer Achsialnut 26 des Blendenbetätigungsringes 9 eingreift. Beim Drehen des Ringes 9 öffnet bzw. schliesst sich die Irisblende 2.

Im Ring 9 ist die Schwenkachse 8 für den Revolver 3 befestigt. Dieser Revolver 3 besitzt drei Schaltstellungen, in denen drei verschiedene Aufnahmeöffnungen unter den Kondensor 1 geschwenkt werden können. Wie Fig. 2 zeigt sind die Aufnahmeöffnungen in einem mit einer Rändelung 13 versehenen Ring eingelassen, der drei Betätigungsfinger 14, 15 und 16 zur Schwenkung des Revolvers besitzt. Diese Betätigungsfinger sind unterschiedlich lang um ein Erkennen der jeweiligen Schaltposition ohne Sicht zu gewährleisten.

Im dargestellten Ausführungsbeispiel ist eine der Aufnahmeöffnungen unbestückt, die zweite trägt einen Einsatz 6, in dem die Hilfslinse 4 zur Beleuchtung grosser Objektfelder gefasst ist, die dritte einen Einsatz 17, in dem der Halter 7 einer Ringblende 5 für Phasenkontrastbeleuchtung befestigt ist. Der Halter 7 besteht aus einer Hülse, die eine kugelkalottenförmige Verdickung 27 aufweist, mit deren Hilfe die Hülse um kleine Winkel allseitig verschwenkt und damit die Ringblende 5 zentriert werden kann.

Alle drei Aufnahmeöffnungen sind mit Erhebungen in Form von konischen Ringsegmenten 10a-c versehen. Diese Ringsegmente rasten beim Verschwenken des Revolvers 3 jeweils in einen konischen Sitz 11 im Blendenbetätigungsring 9 ein. Bei dieser Einrastbewegng verlagert sich der gesamte Revolver 3 gegen die Kraft der Feder 19 entlang der Drehachse 8.

Nach dem Einrasten einer der Erhebungen 10 des Revolvers 3 in den Sitz 11 des Ringes 9 lässt sich die Blendeneinstellung mit den Bedienelementen des Revolvers 3, d. h. mit einem der Finger 14-16 durchführen. Dabei verlagert sich die Schwenkachse 8 des Revolvers 3 auf einer Kreisbahn um die optische Achse des Kondensors 1.

Dreht man den Revolver 3 zum Wechseln der Schaltpositionen immer in die vereinbarte gleiche Richtung weiter, so ist sichergestellt, dass die Blende 2 nach jedem Umschalten stets voll aufgezogen ist. Denn da der Ring 9 nur unter geringer Reibung dreht, rasten die Erhebungen 10 nur dann aus bzw. wieder ein, wenn der Ring 9 gegen einen der Anschläge gelaufen ist, die den Öffnungsbereich der Blende 2 begrenzen.

**Patentansprüche**

1. Durchlichtbeleuchtungseinrichtung, mit einem Kondensor (1), einer Aperturirisblende (2) und einem Revolver (3) zum Zuschalten von Hilfslinsen (4) bzw. Blenden (5) wobei der Revolver (3) mit der Aperturirisblende (2) gekoppelt ist, dadurch gekennzeichnet, dass der Revolver (3) mindestens drei Aufnahmeöffnungen zur wahlweisen Bestückung mit Ringblenden (5) bzw. Hilfslinsen (4) tragenden Einsätzen (6, 7) besitzt und durchschaltbar um eine Drehachse (8) gelagert ist, die exzentrisch an einem, die Blendenbewegung steuernden und um die optische Achse drehbaren Ring (9) befestigt ist und dass Rasten (10a-c, 11) zwischen dem Revolver (3) und dem Ring (9) vorgesehen sind.

2. Durchlichtbeleuchtungseinrichtung nach Anspruch 1, dadurch gekennzeichnet, dass die Aufnahmeöffnungen untereinander gleich ausgeführt sind.

3. Durchlichtbeleuchtungseinrichtung nach Anspruch 1-2, dadurch gekennzeichnet, dass einer der Einsätze ein Ringblendenträger (7) ist, der mit einer Kugelkalotte (27) versehen in einem dafür vorgesehenen Halter (17) gelagert ist.

4. Durchlichtbeleuchtungseinrichtung nach Anspruch 1-3, dadurch gekennzeichnet, dass die Rasten aus einem in den Blendenbetätigungsring eingelassenen, flachen Sitz (11) bestehen, in dem ringförmige Erhebungen (10a-c) in den einzelnen Schaltpositionen des Revolvers (3) mit Hilfe einer in Richtung der Revolverdrehachse (8) wirkenden Feder (19) gedrückt werden.

5. Durchlichtbeleuchtungseinrichtung nach Anspruch 1-4, dadurch gekennzeichnet, dass der Revolver ein mit einer umlaufenden Rändelung (13) versehenes, ringförmiges Gehäuse besitzt, das mehrere, der Anzahl der Aufnahmeöffnungen entsprechende, unterschiedlich geformte Markierungen (14, 15, 16) aufweist.

6. Durchlichtbeleuchtungseinrichtung nach Anspruch 5, dadurch gekennzeichnet, dass die Markierungen als Betätigungsfinger (14, 15, 16) unterschiedlicher Länge ausgebildet sind.

7. Durchlichtbeleuchtungseinrichtung nach Anspruch 1-6, dadurch gekennzeichnet, dass der Kondensor vertikal verschiebbar in einer Steilgewindehülse (12) gelagert ist.

**Claims**

1. A transmitted-light illuminating device having a condenser (1), an aperture iris diaphragm (2) and a turret (3) for the switching-in of auxiliary lenses (4) and/or diaphragms (5), the turret (3) being coupled with the aperture iris diaphragm (2), characterized by the fact that the turret (3) has at least three receiving openings adapted for optional provisions of inserts (6, 7) bearing ring diaphragms (5) and/or auxiliary lenses (4) and is mounted for switching around a swivel shaft (8) which is fixed eccentrically to a ring (9) which controls the movement of the diaphragm and is turnable around the optical axis, and that detents (10 a-c, 11) are provided between the turret (3) and the ring (9).

2. A transmitted-light illuminating device according to Claim 1, characterized by the fact that the receiving openings are developed identically to each other.

3. A transmitted-light illuminating device according to Claim 1 or 2, characterized by the fact that one of the inserts is a ring-diaphragm carrier (7) which, provided with a spherical protrusion (27), is mounted in a holder (17) provided for same.

4. A transmitted-light illuminating device according to Claims 1 to 3, characterized by the fact that said detents comprise a shallow seat (11) in the diaphragm actuating ring, into which annular extensions (10 a-c) are pressed in the individual switch positions of the turret (3) by a spring (19) loading in the direction of the swivel shaft (8) of the turret.

5. A transmitted-light illuminating device according to Claims 1 to 4, characterized by the fact that the turret has an annular housing provided with a peripheral knurling (13), the housing having plural differently shaped markings (14, 15, 16) corresponding to the number of receiving openings.

6. A transmitted-light illuminating device according to Claim 5, characterized by the fact that the markings are developed as actuating fingers (14, 15, 16) of different length.

7. A transmitted-light illuminating device according to Claims 1 to 6, characterized by the fact that the condenser is mounted for vertical displacement in a sleeve (12) provided with a coarse thread.

## Revendications

1. Dispositif d'éclairage par transparence, comprenant un condenseur (1), un diaphragme d'ouverture à iris (2) et une tourelle (3) pour l'adjonction de lentilles auxiliaires (4) ou de diaphragmes (5), dans lequel la tourelle (3) est accouplée au diaphragme d'ouverture (2), caractérisé en ce que la tourelle (3) possède au moins trois ouvertures réceptrices pouvant être garnies selon les désirs de pièces interchangeables (6, 7) portant des diaphragmes annulaires (5) ou des lentilles auxiliaires (4) et est montée de façon à pouvoir être tournée librement, pas à pas, dans un sens, autour d'un axe de rotation (8) fixé en position excentrée à une bague (9) qui commande le mouvement du diaphragme et est rotative autour de l'axe optique, et que des éléments d'arrêt (10a-c, 11) sont prévus entre la tourelle (3) et la bague (9).

2. Dispositif selon la revendication 1, caractérisé en ce que les ouvertures réceptrices sont identiques entre elles.

3. Dispositif selon l'une des revendications 1 ou 2, caractérisé en ce que l'une des pièces interchangeables est un support de diaphragme annulaire (7) pourvu d'une calotte sphérique (27) et monté dans un support (17) prévu à cet effet.

4. Dispositif selon l'une des revendications 1 à 3, caractérisé en ce que les éléments d'arrêt sont constitués d'une portée plane (11), encastrée dans la bague de réglage du diaphragme, dans laquelle des protubérances (10a-c) sont pressées, aux différentes positions de la tourelle (3), à l'aide d'un ressort (19) agissant dans le sens de l'axe de rotation (8) de la tourelle.

5. Dispositif selon l'une des revendications 1 à 4, caractérisé en ce que la tourelle possède un corps annulaire, pourvu d'un moletage périphérique (13), qui présente plusieurs repères (14, 15, 16) de formes différentes, dont le nombre correspond à celui des ouvertures réceptrices.

6. Dispositif selon la revendication 5, caractérisé en ce que les repères sont constitués par des doigts de commande (14, 15, 16) de différentes longueurs.

7. Dispositif selon l'une des revendications 1 à 6, caractérisé en ce que le condenseur est monté déplaçable verticalement dans une douille filetée (12) à pas rapide.

Fig.1

0 098 540

Fig.2